# EUROPEAN PATENT SPECIFICATION

(11) **EP 2 860 911 B1**
(45) Date of publication and mention of the grant of the patent: **27.07.2016**
(21) Application number: 13188314.2
(22) Date of filing: 11.10.2013
(51) Int. Cl.: H04L 12/26, H04L 29/06

(54) **METHOD AND DEVICE FOR CLASSIFYING ENCRYPTED DATA FLOWS BETWEEN AT LEAST ONE WEB CLIENT AND AT LEAST ONE WEB SERVER**
VERFAHREN UND VORRICHTUNG ZUR KLASSIFIZIERUNG VERSCHLÜSSELTER DATENFLÜSSE ZWISCHEN MINDESTENS EINEM WEBCLIENT UND MINDESTENS EINEM WEBSERVER
PROCÉDÉ ET DISPOSITIF POUR LA CLASSIFICATION DE FLUX DE DONNÉES CHIFFRÉES ENTRE AU MOINS UN CLIENT WEB ET AU MOINS UN SERVEUR WEB

(43) Date of publication of application: 15.04.2015
(73) Proprietor: Mitsubishi Electric R&D Centre Europe B.V., 1119 NS Schiphol Rijk (NL); Mitsubishi Electric Corporation, Chiyoda-ku Tokyo 100-8310 (JP)
(72) Inventor: Rollet, Romain, 35708 Rennes Cedex 7 (FR)
(74) Representative: Le Guen-Maillet

(56) References cited:
- US-B1- 7 778 194
- YAMADA A ET AL: "Intrusion Detection for Encrypted Web Accesses", ADVANCED INFORMATION NETWORKING AND APPLICATIONS WORKSHOPS, 2007, AINAW '07. 21ST INTERNATIONAL CONFERENCE ON, IEEE, PISCATAWAY, NJ, USA, 21 May 2007 (2007-05-21), pages 569-576, XP031334580, ISBN: 978-0-7695-2847-2
- CHUN-NAN LU ET AL: "Session level flow classification by packet size distribution and session grouping", COMPUTER NETWORKS, ELSEVIER SCIENCE PUBLISHERS B.V., AMSTERDAM, NL, vol. 56, no. 1, 9 September 2011 (2011-09-09), pages 260-272, XP028353983, ISSN: 1389-1286, DOI: 10.1016/J.COMNET.2011.09.007 [retrieved on 2011-09-16]

## Description

The present invention generally relates to classifying encrypted data flows occurring between at least one web client and at least one web server in the scope of web browsing sessions.

HTTPS *(HyperText Transfer Protocol Secure*, as specified by the normative document RFC 2818) is widely implemented to carry encrypted HTTP *(HyperText Transfer Protocol*, as specified in the normative document RFC 2616 for HTTP/1.1) data in the scope of web browsing sessions. HTTPS provides authentication of visited web sites and of associated web servers by using certificates. Such an authentication mechanism protects against attacks of Man-in-the-middle type, which means that the web client is able to detect if some third party is decrypting the data exchange between the web server and the web client. HTTPS further provides bidirectional encryption for communications between the web client and the web server, which provides protection against eavesdropping and tampering.

HTTPS mainly consists in layering HTTP on top of SSL (*Secure Sockets Layer*, as specified in the normative document RFC 6101) or TLS (*Transport Layer Security*, as specified in the normative documents RFC 2246, RFC 4346 and RFC 5246), thus adding security capabilities offered by SSL/TLS to standard HTTP communications.

It means that the whole HTTP data is encrypted in the scope of HTTPS. Therefore encryption is applied to request URLs (Uniform Resource Locator, indicating which particular web page is requested), query parameters, headers and cookies (which often contain identity information about the user). However, IP (Internet Protocol, as specified in the normative document RFC 791) addresses and TCP (Transmission Control Protocol, as specified in the normative document RFC 793) port numbers used to route data between the web server and the web client are transported in clear form.

Many methods are known to classify encrypted data flows according to the type of data that said encrypted data flows transport, although there is no a priori knowledge of the effective data payload content as said data payload is encrypted. Classifying data flows allows performing profiling, applying adapted QoS (Quality of Service) mechanisms and is a well-known technical objective in network communications. As the TCP payload is encrypted in the scope of HTTPS, only information contained into IP headers and TCP headers are readable by third parties. Therefore, said methods try to exploit relevant fields of TCP/IP protocol headers (such as segment size field) and/or to build statistics (such as amount of bytes transferred) and/or timing measurements (such as inter-arrival time periods) in order to classify encrypted data flows.

However, most of said methods are designed to be executed offline and said methods require large memory and processing resources. Furthermore, the performance of such methods for classifying encrypted data flows needs to be improved, since these methods rely on an IP address-based approach. Indeed, IP address-based approaches may lead to inappropriate classification of the encrypted data flows, as plural communications devices may share a same public IP address when Network Address Translation (NAT) is implemented. More, many web servers associated to different types of online services may be hosted on a single hardware platform and thus share a same IP address. Relying on the IP address to perform classification therefore leads, in many cases, to misclassify the encrypted data flows by gathering statistical information related to actually distinct online services.

YAMADA A ET AL: "Intrusion Detection for Encrypted Web Accesses", 21 May 2007 (2007-05-21), pages 569-576 discloses a traffic analysis system to detect attacks against web server.

CHUN-NAN LU ET AL: "Session level flow classification by packet size distribution and session grouping", 9 September 2011 (2011-09-09), pages 260-272 discloses a system to classify network traffic into specific applications which works even in the presence of encryption e.g. HTTPS. First it classifies flows using the packet size distribution and then groups flows belonging into the same "session" when their source ports and time are within a specific range. If flows of a single group get classified into different applications then a "arbitration process" reclassifies them to the application that has most flows.

Patent application US 7778194 B1 discloses a system for the classification of encrypted traffic e.g. HTTPS, SSL. Features of certificates exchanged during the SSL handshake, e.g. common name / server domain name, header length, are extracted to contribute to the classification. Flows e.g. IP 5 tuples, are defined within specific time range and are matched against various traffic classes.

It is desirable to overcome the aforementioned drawbacks of the state of the art.

In particular, it is desirable to provide a solution that allows classifying encrypted data flows occurring between at least one web client and at least one web server in the scope of web browsing sessions.

It is furthermore desirable to provide a solution that provides improved performance compared with the prior art solutions.

It is furthermore desirable to provide a solution that is easy-to-implement and that is cost-effective.

To that end, the present invention concerns a method for classifying encrypted data flows occurring between at least one web client and at least one web server, said encrypted data flows being transported via transport connections set up between said at least one web client and said at least one web server. The method is performed by an analyser device and comprises: a first determining step of determining information representative of instants at which said transport connections have been respectively initiated, information about addressing of endpoints of said transport connections and information about a quantity of data and/or a quantity of segments transported by said transport connections; a second determining step of determining a domain name with which is associated each web server that is an endpoint of any one of said transport connections; a grouping step of grouping transport connections into clusters according to criteria related to said instants at which said transport connections have been respectively initiated and to the addressing of the web clients that are endpoints of said transport connections; a comparing step of comparing, for each cluster, the domain names associated with the transport connections of said cluster and the quantity of data and/or the quantity of segments transported by the transport connections of said cluster with predefined web browsing session profiles; and a classifying step of classifying the encrypted data flows on the basis of a result of the comparing step. Thus, by relying on creating clusters of said transport connections, the method achieves improved classifying performance compared with the prior art solutions. Creating cluster of transport connections allows managing situations in which a single hardware platform hosts plural web servers using a single domain name.

According to a particular feature, said encrypted data flows are in accordance with HTTPS and the transport connections are in accordance with TCP. Thus, the method can be applied to the HTTPS and TCP protocols, which are widely implemented in the scope of web browsing.

According to a particular feature, the instants at which the transport connections have been initiated correspond to instants at which said analyser device receives respective SYN TCP segments of said transport connections.

According to a particular feature, the addressing consisting of an address and a port, the grouping step is performed such that: each cluster only contains transport connections with the same web client address; each cluster only contains transport connections with respective web client ports in a range such that, when ordering the transport connections according to their respective web client port, the difference between two successive web client ports does not exceed a first predefined threshold; and each cluster only contains transport connections that have been initiated in a range such that, when ordering the transport connections according to the instants at which said transport connections have been initiated, the difference between two successive instants at which said transport connections have been initiated does not exceed a second predefined threshold. Thus, the creation of clusters is simple and substantially reliable.

According to a particular feature, any transport connection that is grouped in a cluster has a duration that exceeds a third predefined threshold. Thus, the analyser device can easily withdraw transport connections that does not correspond to web browsing sessions because said transport connections is not long enough to correspond to web browsing sessions.

According to a particular feature, any transport connection that is grouped in a cluster has a duration that is below a fourth predefined threshold, the fourth predefined threshold being strictly greater than the third predefined threshold. Thus, the analyser device can easily withdraw transport connections that does not correspond to web browsing sessions because said transport connections is too long to correspond to web browsing sessions.

According to a particular feature, the analyser device determines the durations of the transport connections on the basis of instants at which said analyser device receives respective FIN ACK TCP segments of said transport connections.

According to a particular feature, the analyser device determines the durations of the transport connections on the basis of instants at which said analyser device receives the last TCP segments of said transport connections with useful payload.

According to a particular feature, the analyser device considers that a cluster doesn't match a predefined web browsing session profile when domain names associated with the transport connections of the cluster don't coincide with domain names listed in said web browsing predefined session profile.

According to a particular feature, the analyser device considers that a cluster matches a predefined web browsing session profile when information representative of the difference between information related to said cluster and information related to said predefined web browsing session profile is below a fifth predefined threshold.

According to a particular feature, for each domain associated with any transport connection of a cluster to compare with a predefined web browsing session profile, the method comprises: a third determining step of determining a first distance between a quantity of transport connections of said cluster and a quantity of transport connections expected by said predefined web browsing session profile; a fourth determining step of determining a second distance between the quantity of segments transmitted via the transport connections of said cluster and a quantity of segments expected by said predefined web browsing session profile; a fifth determining step of determining a third distance between the quantity of data transmitted via the transport connections of said cluster and a quantity of data expected by said predefined web browsing session profile; and a sixth determining step of determining a sum of the first, second and third distances and of comparing the sum with a sixth predefined threshold. The method further comprises: a seventh determining step of determining a quantity of domains associated with any transport connection of the cluster for which the sum of the first, second and third distances is below the sixth predefined threshold; and considering that the cluster matches the predefined web browsing session profile when said quantity of domains is above a seventh predefined threshold.

The present invention also concerns a device for classifying encrypted data flows, said encrypted data flows aiming at occurring between at least one web client and at least one web server and at being transported via transport connections set up between said at least one web client and said at least one web server. Said device comprises: first determining means for determining information representative of instants at which said transport connections have been respectively initiated, information about addressing of endpoints of said transport connections and information about a quantity of data and/or a quantity of segments transported by said transport connections; second determining means for determining a domain name with which is associated each web server that is an endpoint of any one of said transport connections; grouping means for grouping transport connections into clusters according to criteria related to said instants at which said transport connections have been respectively initiated and to the addressing of the web clients that are endpoints of said transport connections; comparing means for comparing, for each cluster, the domain names associated with the transport connections of said cluster and the quantity of data and/or the quantity of segments transported by the transport connections of said cluster with predefined web browsing session profiles; and classifying means for classifying the encrypted data flows on the basis of a result of implementing the comparing means.

The present invention also concerns a computer program that can be downloaded from a communications network and/or stored on a medium that can be read by a computer and run by a processor. This computer program comprises instructions for implementing the aforementioned method in any one of its embodiments, when said program is run by the processor. The present invention also concerns information storage means, storing such a computer program.

Since the features and advantages related to the device and to the computer program are identical to those already mentioned with regard to the corresponding aforementioned method, said features and advantages are not repeated here.

The characteristics of the invention will emerge more clearly from a reading of the following description of an example of embodiment, said description being produced with reference to the accompanying drawings, among which:
Fig. 1 schematically represents a communication system in which the present invention may be implemented;
Fig. 2 schematically represents an architecture of an analyser device of the communication system; and
Fig. 3 schematically represents an algorithm, performed by the analyser device, for classifying encrypted data flows occurring between at least one web client and at least one web server in the scope of web browsing sessions.

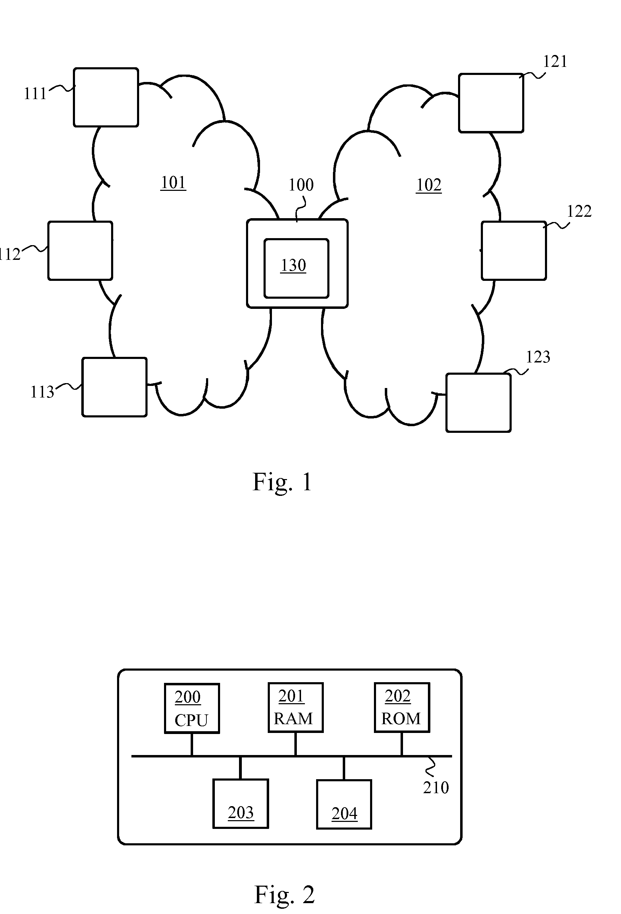

**Fig. 1** schematically represents a communication system in which the present invention may be implemented. The communication system comprises an analyser device 130 located on a path via which encrypted data flows are transported between at least one web server and at least one web client. Said encrypted data flows are preferably in the form of HTTPS data exchanges relying on TCP transport protocol. The classifying mechanism described herein can however apply to other types of encrypted data flows in the scope of web browsing sessions, which rely on connection-oriented transport protocols. Let's illustratively, and in a non limitative manner, consider hereinafter that the encrypted data flows are in the form of HTTPS data exchanges relying on TCP transport protocol.

In a particular embodiment as shown in Fig. 1, the analyser device 130 is included in a communication device 100. The communication device 100 is adapted for interconnecting a first communications network 101 and a second communications network 102. The communication device 100 is further adapted to forward to the analyser device 130 TCP segments that are transmitted across the communication device 100. The communication device 100 is typically a home gateway device, the second communications network 102 is a Local Area Network (LAN) and the first communications network 101 is the Internet. The communication device 100 may interconnect more communications networks. The communication device 100 may be an IP router, a Wi-Fi (registered trademark) access point or a router implementing the same.

As shown in Fig. 1, the first communications network 101 comprises one or more server devices and the second communications network 102 comprises one or more client devices. Fig. 1 illustratively shows three server devices 111, 112, 113 in the first communications network 101 and three client devices 121, 122, 123 in the second communications network 102.

In order to classify the encrypted data flows, it is proposed to gather information representative of instants at which the TCP connections have been respectively initiated, information about addressing (IP addresses and TCP ports) of endpoints of said transport connections and information about a quantity of data and/or a quantity of segments transported by said TCP connections. It is further proposed to determine a domain name with which is associated each web server that is an endpoint of any one of said TCP connections. It is further proposed to group TCP connections into clusters according to criteria related to said instants at which said transport connections have been respectively initiated and to the addressing (IP addresses and TCP ports) of the web clients. It is further proposed to compare, for each cluster, the domain names associated with the TCP connections of said cluster and the quantity of data and/or the quantity of segments transported by said TCP connections with predefined web browsing session profiles, and to classifying the encrypted data flows accordingly.

**Fig. 2** schematically represents a hardware architecture of the analyser device 130. According to the shown architecture, the analyser device 130 comprises the following components interconnected by a communications bus 210: a processor, microprocessor, microcontroller or CPU (*central Processing Unit)* 200; a RAM (*Random-Access Memory*) 201; a ROM (*Read-Only Memory*) 202; an HDD *(Hard Disk Drive*) 203, or any other device adapted to read information stored on storage means; and, a set 204 of communication interfaces, which allows connecting the analyser device 130 to at least one communications network, such as for instance the first communications network 101 and the second communications network 102.

CPU 200 is capable of executing instructions loaded into RAM 201 from ROM 202, from an external memory such as an SD (*Secure Digital*) card, or from HDD 203. After the analyser device 130 has been powered on, CPU 200 is capable of reading instructions from RAM 201 and executing these instructions. The instructions form one computer program that causes CPU 200 to perform some or all of the steps of the algorithms described hereafter.

Any and all steps of the algorithms described hereafter may be implemented in software by execution of a set of instructions or program by a programmable computing machine, such as a PC (*Personal Computer*), a DSP (*Digital Signal Processor*) or a microcontroller; or else implemented in hardware by a machine or a dedicated component, such as an FPGA (*Field-Programmable Gate Array*) or an ASIC (*Application-Specific Integrated Circuit*).

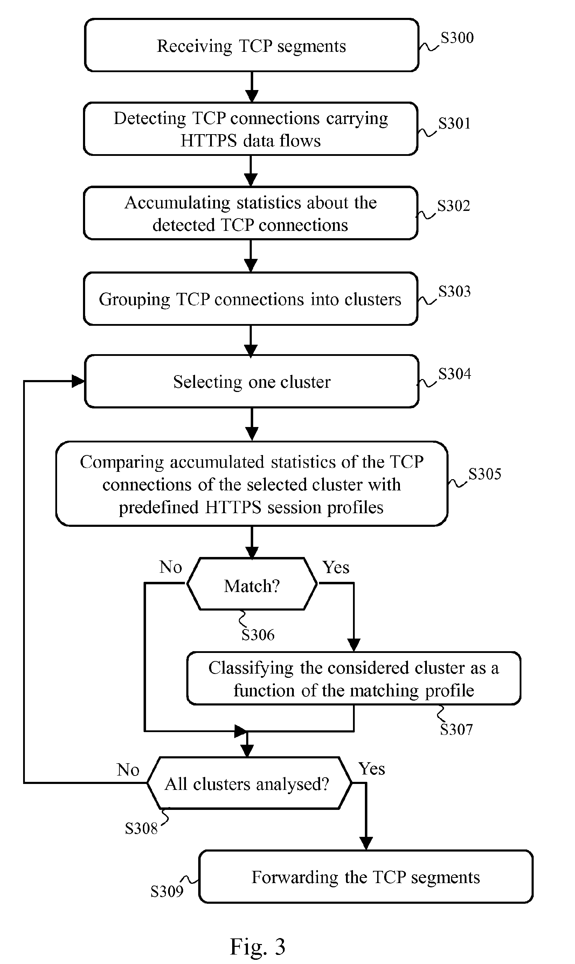

Fig. 3 schematically represents an algorithm, performed by the analyser device 130, for classifying encrypted data flows occurring between at least one web client and at least one web server in the scope of web browsing sessions.

In a step S300, the analyser device 130 receives data flows passing between the first 101 and second 102 communications networks, *i.e.* across the communication device 100 in the communication system shown in Fig. 1.

In a following step S301, the analyser device 130 filters HTTPS data flows among said received data flows, in order to further analyse the filtered HTTPS data flows. In other words, the analyser device 130 detects TCP connections carrying HTTPS data flows.

TCP connections carrying TLS data can be detected using a simple pattern matching mechanism applied to the first bytes of the TCP payload in the first data segment emitted by the initiator of the TCP connection. TLS Client Hello messages, which are transmitted in clear form during a handshake procedure, can be easily detected as said TLS Client Hello messages have a particular format. Detection of TLS Client Hello messages may be confirmed by analysing the contents of the messages that follow in the other communication direction. Indeed, a TLS server is expected to transmit a TLS Server Hello message in response to a TLS Client Hello message. Detecting TLS Client Hello messages and TLS Server Hello messages only require analysing the eleven first bytes in sequence of TCP payload of the two first data segments in sequence exchanged between the web client and the web server for setting up the encrypted communication.

However, TLS may also be implemented in other contexts than HTTPS and resulting TCP connexions may be setup via the communication device 100. For instance, some VPN (Virtual Private Network) and file transfer technologies rely on TLS. In order to distinguish TLS session carrying HTTP data among plural TLS sessions detected by the analyser device 130, information about TCP connection duration is used. Indeed, HTTP authorizes persistent TCP connections in order to optimize performance of web servers. It means that once an initial HTTP data exchange is terminated, the concerned TCP connection is maintained opened for a longer time period than effectively needed for performing an initial data transfer, in order to allow later on carrying further HTTP data. TCP connections are typically associated with respective timers, said timers being reset each time some data are exchanged via said respective TCP connections. Upon timer expiration, the associated TCP connection is terminated by the web server by sending a FIN TCP segment to the web client. For instance, the Apache HTTP server release 2.0 uses a default timer equal to fifteen seconds, while the Apache HTTP server release 2.2 uses a default timer equal to five seconds.

The analyser device 130 is then able to capture HTTP traffic by monitoring the duration of TCP connections detected by the analyser device 130. TCP connections, which carry TLS sessions data and which have a duration longer than a predefined threshold, may then be considered by the analyser device 130 as TCP connections carrying HTTPS data flows.

In a following step S302, the analyser device 130 accumulates statistics about the TCP connections carrying HTTPS data flows detected in the step S301. The analyser device 130 preferably stores the accumulated statistics in a database. The analyser device 130 thus maintains TCP connection-related information in a so-called *TCP context* that is created and associated with each respective TCP connection carrying HTTPS data flows detected in the step S301.

Each TCP context is maintained in the first database until a dedicated timer has expired, said dedicated timer being set to a default value when said TCP context is being created by the analyser device 130. Said dedicated timer is reset to its default value each time a TCP segment with non null payload is received by the analyser device 130. Said default value shall be chosen long enough to allow HTTP requests to be sent by the web client in the scope of the same web session. Said default value may be defined via field tests.

In a preferred embodiment, the TCP context contains the following information:
- an identifier of the TCP context, allowing to distinguish said TCP context from amongst the TCP contexts;
- information representative of the IP address of a first endpoint of the considered TCP connection;
- information representative of the TCP port of the first endpoint of the considered TCP connection;
- information representative of the IP address of a second endpoint of the considered TCP connection;
- information representative of the TCP port of the second endpoint of the considered TCP connection;
- information representative of the domain name of the web server involved in the considered TCP connection;
- information representative of an instant at which the considered TCP connection has been initiated;
- information representative of an instant at which the last TCP segment has been transmitted within the considered TCP connection;
- information representative of an instant at which the considered TCP connection has been terminated;
- information representative of a quantity of TCP segments transmitted within the considered TCP connection; and
- information representative of a quantity of data *(e.g.* in bytes) transmitted within the considered TCP connection.

The information representative of the IP address of the first endpoint, the TCP port of the first endpoint, the IP address of the second endpoint and the TCP port of the second endpoint are obtained by reading fields of the TCP segments received within the concerned TCP connexion. When the analyser device 130 receives a TCP segment detected as carrying HTTPS data, the analyser device 130 collects information contained in the IP source address, TCP source port, IP destination address and TCP destination port fields. The IP source address and the TCP source port correspond respectively to information representative of the IP address and the TCP port of one of the TCP connection endpoints. The IP destination address and the TCP destination port correspond respectively to information representative of the IP address and the TCP port of the other one of the TCP connection endpoints.

When said collected information is already present in the first database, the analyser device 130 updates the TCP context in accordance with the received TCP segments.

When said collected information is not yet present in the first database, the analyser device 130 creates a TCP context for the TCP connection to which the TCP segments belong. Preferably, the analyser device 130 creates the TCP context upon receiving a SYN TCP segment or a SYN-ACK TCP segment. Therefore, when the analyser device 130 receives a TCP segment that is not a SYN TCP segment or a SYN-ACK TCP segment for a TCP connexion having no TCP context in the first database, the analyser device 130 only forwards the TCP segment.

The information representative of the domain name of the web server can be obtained by the analyser device 130 for instance by using the WHOIS protocol, as specified in the normative document RFC 3912. In the context of the WHOIS protocol, the analyser device 130 provides the IP address of one endpoint of the considered TCP connection to a server having WHOIS search capabilities, which provides in response a set of information registered in association with the provided IP address, said set of information including domain name information. The endpoint the IP address of which is provided is the endpoint that is considered by the analyser device 130 as hosting the web server. One way to determine which endpoint hosts the web server is to quote the IP destination address of the SYN TCP segment received for the considered TCP connection or the IP source address of the SYN-ACK TCP segment received for the considered TCP connection. Indeed, TCP connections in the context of web server accesses are typically initiated by the web client.

The instant at which the analyser device 130 detects the TCP SYN segment within the considered TCP connection can be used as information representative of the instant at which the considered TCP connection has been initiated.

When the analyser device 130 receives a TCP segment for a TCP connection for which a TCP context is already present in the first database, the analyser device 130 determines the instant at which said TCP segment has been received by the analyser device 130 and updates accordingly the information representative of the instant at which the last TCP segment has been transmitted within the considered TCP connection.

Furthermore, when the analyser device 130 receives a TCP segment for a TCP connection for which a TCP context is already present in the first database, the analyser device 130 increments by one unit a first counter associated with said TCP context and updates accordingly the information representative of the quantity of TCP segments transmitted within the considered TCP connection. The first counter is set to "1" when the TCP SYN segment is received by the analyser device 130 for the considered TCP connection and therefore when the TCP context is created.

Furthermore, when the analyser device 130 receives a TCP segment for a TCP connection for which a TCP context is already present in the first database, the analyser device 130 increments a second counter associated with said TCP context and updates accordingly the information representative of the quantity of data transmitted within the considered TCP connection. The second counter is incremented by a value which corresponds to the payload size of the received TCP segment. The second counter is reset when the TCP SYN segment is received by the analyser device 130 for the considered TCP connection and therefore when the TCP context is created.

Furthermore, when the analyser device 130 receives a FIN ACK TCP segment for a TCP connection for which a TCP context is already present in the first database, the analyser device 130 determines the instant at which said TCP FIN ACK segment has been received by the analyser device 130 and updates accordingly the information representative of the instant at which the considered TCP connection has been terminated.

Furthermore, when the analyser device 130 receives a TCP segment with useful payload for a TCP connection for which a TCP context is already present in the first database, the analyser device 130 determines the instant at which said TCP segment has been received by the analyser device 130 and updates accordingly the information representative of the instant at which the last TCP segment for the considered TCP connection has been received.

In a following step S303, the analyser device 130 groups into clusters the TCP connexions for which a TCP context is stored in the first database. Each cluster formed by the analyser device 130 is considered as potentially corresponding to a single web browsing session. Indeed, when accessing a web page, web clients usually open several simultaneous TCP connections toward plural web servers, said TCP connections being maintained active during a long time period after the end of the initial data transfers. Web pages usually contain references and links to resource hosted by different web servers. Web page designers avoid embedding external unencrypted resources in a web page to be accessed via the HTTPS protocol, since such situation would generate web browser exceptions. Therefore, most of the time, external resources are also hosted by HTTPS servers. When accessing a web page hosted by an HTTPS server, the web client not only opens HTTPS sessions to said web server, but also opens sessions with other HTTPS servers for downloading external data to which a requested web page refers.

The analyser device 130 creates the clusters on the basis of the IP address of the web client, of the TCP ports and of the instants at which the considered TCP connections have been initiated. It should be noted that one way to determine which endpoint is the web server has been described above. The web client is therefore the other endpoint of the TCP connection.

The communication device applies the following rules to form the clusters:
- each cluster only contains TCP connections with the same web client IP address;
- each cluster only contains TCP connections with respective TCP source ports in a same TCP source port range; and
- each cluster only contains TCP connections that have been initiated in the same time range.

When sorting TCP connections according to their TCP source ports, *TCP connections with respective TCP source ports in a same TCP source port range* means that the interval between the port numbers of two successive TCP connections does not exceed a first predetermined threshold Th1. For instance, the first predetermined threshold Th1 is set to "4". Indeed, when initiating a TCP connection, the TCP source port is usually incremented by one unit compared to a preceding TCP connection initiated by the web client for the same web browsing session.

When sorting TCP connections according to the instants at which said TCP connections have been initiated, *TCP connections that have been initiated in the same time range* means that the interval between the instants at which two successive TCP connections have been initiated shall not exceed a predetermined threshold Th2. For instance, the second predetermined threshold Th2 is set to 1 second.

It should be noted that determining clusters may be performed in real-time since the required fields are filled upon TCP connections opening.

The analyser device 130 may further take into account the time duration of a TCP connection to decide whether or not including said TCP connection in a cluster. Indeed, as already mentioned, in the context of web page accesses, the TCP connections are typically maintained active during a long time period after the end of the initial data transfers. Therefore, the analyser device 130 may decide including a TCP connection in a cluster when the duration of said TCP connection is longer than a third predefined threshold Th3. Said third predefined threshold Th3 is for instance defined according to field tests. Moreover, the analyser device 130 may decide including a TCP connection in a cluster when the duration of said TCP connection is shorter than a fourth predefined threshold Th4, wherein the fourth predefined threshold Th4 is strictly greater than the third predefined threshold Th3. Said fourth predefined threshold Th4 is for instance defined according to field tests. It allows not confusing HTTPS sessions data with for instance VPN sessions data.

The duration of said TCP connection is determined by the time difference between the instant at which the TCP connection has been initiated and the instant at which the TCP connection has been terminated, information representative of which being stored in the TCP context associated with said TCP connection. In a variant embodiment, the duration of said TCP connection is determined by the time difference between the instant at which the TCP connection has been initiated and the instant at which the last TCP segment of said TCP connection with useful payload has been received by said analyser device, information representative of which being stored in the TCP context associated with said TCP connection. In this variant embodiment, the time period over which effective transfers occur via the TCP connection is considered.

The analyser device 130 thus maintains cluster-related information in a so-called *cluster context* that is created and associated with each respective cluster formed in the step S303.

In a preferred embodiment, the cluster context contains the following information:
- an identifier of the cluster, allowing distinguishing said cluster from amongst all clusters;
- a list of the identifiers of the TCP contexts of the respective TCP connections forming the considered cluster;
- an identifier of a predefined web browsing session profile matched by the considered cluster; and
- a list of domain statistics, which are a collection of statistics per domain concerned by at least one TCP connection of the considered cluster.

The identifier of the web browsing session profile matched by the considered cluster is not filled when creating the cluster context, *i.e.* is meaningless at cluster context creation. Such information is effectively filled after having compared the cluster characteristics with predefined web browsing session profiles, as detailed hereafter.

The domain statistics are determined from the TCP contexts of the respective TCP connections forming the considered cluster. In a preferred embodiment, the domain statistics include the following information:
- information representative of the domain name of the web server involved in the considered TCP connections;
- information representative of the quantity of TCP connections of said cluster that involved a server in said domain;
- information representative of the quantity of TCP segments transmitted via said TCP connections of said cluster; and
- information representative of the quantity of data transmitted via said TCP connections of said cluster.

In a following step S304, the analyser device 130 selects one cluster among the clusters defined in the step S303.

In a following step S305, the analyser device 130 compares the selected cluster context with predefined web browsing session profiles, preferably stored in a second database. Basically, the same kind of information is available in each predefined web browsing session profile as in any cluster context. The predefined web browsing session profiles may further comprise additional information, such as names and categories of web services representative of the respective predefined web browsing session profiles. Anyway, the predefined web browsing session profiles comprise respective distinct identifiers. The contents of the second database are predetermined, for instance via field tests. The contents of the second database may be dynamically modified, for instance using a database update procedure via a communications network.

In a preferred embodiment, for each domain identified in the domain statistics of the selected cluster, the analyser device 130 checks whether said domain is present in said predefined web browsing session profile. When at least one said domain is not present in said predefined web browsing session profile, the analyser device 130 considers that said cluster does not match said predefined web browsing session profile. Moreover, for each domain identified in said predefined web browsing session profile, the analyser device 130 checks whether said domain is present in the domain statistics of the selected cluster. When at least one said domain is not present in the domain statistics of the selected cluster, the analyser device 130 considers that said cluster does not match said predefined web browsing session profile.

In one embodiment, the analyser device 130 considers that the selected cluster matches a predefined web browsing session profile when information representative of the difference between the information contained in the corresponding cluster context and the information contained in said predefined web browsing session profile is below a fifth predefined threshold Th5. The fifth predefined threshold Th5 may be defined via field tests. In an illustrative embodiment, the analyser device 130 may rely on a soft output mechanism, for instance by implementing an artificial neural network. The artificial neural network is configured for pattern recognition in such a way that each cluster is input to the artificial neural network and information representative of a distance between said cluster and the predefined web browsing session profiles is provided by the artificial neural network. The predefined web browsing session profile corresponding to the shortest distance, when said shortest distance is above the fifth predefined threshold Th5, is considered as being matched by the cluster.

In another embodiment, the analyser device 130 performs an analysis on a per domain basis. For each domain, the analyser device 130 determines a first distance between the quantity of TCP connections of said cluster and the quantity of TCP connections expected by said predefined web browsing session profile. The analyser device 130 further determines a second distance between the quantity of TCP segments transmitted via the TCP connections of said cluster and the quantity of TCP segments expected by said predefined web browsing session profile. The analyser device 130 further determines a third distance between the quantity of TCP data transmitted via the TCP connections of said cluster and the quantity of TCP data expected by said predefined web browsing session profile. When the sum of the first, second and third distances is below a sixth predefined threshold Th6, the analyser device 130 considers that the domain characteristics of the selected cluster match the predefined web browsing session profile. Once all domains present in the selected cluster are analysed, the analyser device 130 compares the quantity of domains present in the selected cluster which are considered as matching the predetermined web browsing session profile with a seventh predefined threshold Th7. When the quantity of domains present in the selected cluster which are considered as matching the predetermined session profile is above the seventh predefined threshold Th7, the analyser device 130 considers that the selected cluster matches said predefined web browsing session profile; otherwise, the analyser device 130 considers that the selected cluster does not match said predefined web browsing session profile.

The analyser device 130 thus compares the characteristics of the selected cluster with each predefined web browsing session profile stored in the second database until the selected cluster matches one predefined web browsing session profile or until all predefined web browsing session profiles stored in the second database have been considered.

In a following step S306, the analyser device 130 checks whether the selected cluster matches one of the predefined web browsing session profile. When the selected cluster matches one of the predefined web browsing session profile, a step S307 is performed; otherwise, a step S308 is performed.

In the step S307, the analyser device 130 classifies the selected cluster as a function of the web browsing predefined session profile that is matched by the selected cluster. The analyser device 130 stores, in the cluster context associated with the selected cluster, information representative of an identifier of said predefined web browsing session profile. The analyser device 130 therefore classifies the selected cluster. Then, the step S308 is performed.

In the step S308, the analyser device 130 checks whether all clusters formed in the step S303 have been analysed. When all clusters formed in the step S303 have been analysed, a step S309 is performed; otherwise, the step S305 is repeated by selecting a cluster that has not yet been analysed.

In the step S309, the analyser device 130 forwards the TCP segments that were received in the step S300, so that said TCP segments are able to continue their route via either the first communications network 101 or the second communications network 102.

## Claims

1. A method for classifying encrypted data flows occurring between at least one web client and at least one web server, said encrypted data flows being transported via transport connections set up between said at least one web client and said at least one web server, the method being performed by an analyser device, wherein the method comprises:
- a first determining step (s301) of determining information representative of instants at which said transport connections have been respectively initiated, information about addressing of endpoints of said transport connections and information about a quantity of data and/or a quantity of segments transported by said transport connections;
- a second determining step (s302) of determining a domain name with which is associated each web server that is an endpoint of any one of said transport connections;
- a grouping step (s303) of grouping transport connections into clusters according to criteria related to said instants at which said transport connections have been respectively initiated and to the addressing of the web clients that are endpoints of said transport connections;
- a comparing step (s305) of comparing, for each cluster, the domain names associated with the transport connections of said cluster and the quantity of data and/or the quantity of segments transported by the transport connections of said cluster with predefined web browsing session profiles; and
- a classifying step (s306) of classifying the encrypted data flows on the basis of a result of the comparing step.

2. The method according to claim 1, **characterized in that** said encrypted data flows are in accordance with HTTPS and the transport connections are in accordance with TCP.

3. The method according to claim 2, **characterized in that** the instants at which the transport connections have been initiated correspond to instants at which said analyser device receives respective SYN TCP segments of said transport connections.

4. The method according to any one of claims 1 to 3, **characterized in that**, the addressing consisting of an address and a port, the grouping step is performed such that:
- each cluster only contains transport connections with the same web client address;
- each cluster only contains transport connections with respective web client ports in a range such that, when ordering the transport connections according to their respective web client port, the difference between two successive web client ports does not exceed a first predefined threshold; and
- each cluster only contains transport connections that have been initiated in a range such that, when ordering the transport connections according to the instants at which said transport connections have been initiated, the difference between two successive instants at which said transport connections have been initiated does not exceed a second predefined threshold.

5. The method according to any one of claims 1 to 4, **characterized in that** any transport connection that is grouped in a cluster has a duration that exceeds a third predefined threshold.

6. The method according to claims 5, **characterized in that** any transport connection that is grouped in a cluster has a duration that is below a fourth predefined threshold, the fourth predefined threshold being strictly greater than the third predefined threshold.

7. The method according to claims 2 and 5 or to claims 2 and 6, **characterized in that** the analyser device determines the durations of the transport connections on the basis of instants at which said analyser device receives respective FIN ACK TCP segments of said transport connections.

8. The method according to any one of claims 1 to 7, **characterized in that** the analyser device determines the durations of the transport connections on the basis of instants at which said analyser device receives the last TCP segments of said transport connections with useful payload.

9. The method according to any one of claims 1 to 8, **characterized in that** the analyser device considers that a cluster doesn't match a predefined web browsing session profile when domain names associated with the transport connections of the cluster don't coincide with domain names listed in said web browsing predefined session profile.

10. The method according to any one of claims 1 to 9, **characterized in that** the analyser device considers that a cluster matches a predefined web browsing session profile when information representative of the difference between information related to said cluster and information related to said predefined web browsing session profile is below a fifth predefined threshold.

11. The method according to claim 10, **characterized in that**, for each domain associated with any transport connection of a cluster to compare with a predefined web browsing session profile, the method comprises:
- a third determining step of determining a first distance between a quantity of transport connections of said cluster and a quantity of transport connections expected by said predefined web browsing session profile;
- a fourth determining step of determining a second distance between the quantity of segments transmitted via the transport connections of said cluster and a quantity of segments expected by said predefined web browsing session profile;
- a fifth determining step of determining a third distance between the quantity of data transmitted via the transport connections of said cluster and a quantity of data expected by said predefined web browsing session profile; and
- a sixth determining step of determining a sum of the first, second and third distances and of comparing the sum with a sixth predefined threshold;
and **in that** the method further comprises:
- a seventh determining step of determining a quantity of domains associated with any transport connection of the cluster for which the sum of the first, second and third distances is below the sixth predefined threshold; and
- considering that the cluster matches the predefined web browsing session profile when said quantity of domains is above a seventh predefined threshold.

12. A device for classifying encrypted data flows, said encrypted data flows aiming at occurring between at least one web client and at least one web server and at being transported via transport connections set up between said at least one web client and said at least one web server, wherein the device comprises:
- first determining means for determining information representative of instants at which said transport connections have been respectively initiated, information about addressing of endpoints of said transport connections and information about a quantity of data and/or a quantity of segments transported by said transport connections;
- second determining means for determining a domain name with which is associated each web server that is an endpoint of any one of said transport connections;
- grouping means for grouping transport connections into clusters according to criteria related to said instants at which said transport connections have been respectively initiated and to the addressing of the web clients that are endpoints of said transport connections;
- comparing means for comparing, for each cluster, the domain names associated with the transport connections of said cluster and the quantity of data and/or the quantity of segments transported by the transport connections of said cluster with predefined web browsing session profiles; and
- classifying means for classifying the encrypted data flows on the basis of a result of implementing the comparing means.

13. A computer program comprising program code instructions which can be loaded in a programmable device for implementing the method according to any one of claims 1 to 11, when the program code instructions are run by the programmable device.

14. Information storage means storing a computer program comprising program code instructions which can be loaded in a programmable device for implementing the method according to any one of claims 1 to 11, when the program code instructions are run by the programmable device.

## Patentansprüche

1. Verfahren zum Klassifizieren verschlüsselter Datenflüsse, die zwischen wenigstens einem Webclient und wenigstens einem Webserver auftreten, wobei die verschlüsselten Datenflüsse über Transportverbindungen transportiert werden, die zwischen dem wenigstens einen Webclient und dem wenigstens einen Webserver aufgebaut sind, wobei das Verfahren durch eine Analysevorrichtung durchgeführt wird, wobei das Verfahren folgendes aufweist:
- einen ersten Bestimmungsschritt (s301) zum Bestimmen von Information, die Momente darstellt, zu welchen die Transportverbindungen jeweils initiiert worden sind, von Information über eine Adressierung von Endpunkten der Transportverbindungen und von Information über eine Quantität von Daten und/oder eine Quantität von Segmenten, die durch die Transportverbindungen transportiert sind;
- einen zweiten Bestimmungsschritt (s302) zum Bestimmen eines Domänennamens, mit welchem jeder Webserver assoziiert ist, der ein Endpunkt von irgendeiner der Transportverbindungen ist;
- einen Gruppierungsschritt (s303) zum Gruppieren von Transportverbindungen in Cluster gemäß Kriterien in Bezug auf die Momente, zu welchen die Transportverbindungen jeweils initiiert worden sind, und auf die Adressierung der Webclients, die Endpunkte der Transportverbindungen sind;
- einen Vergleichsschritt (s305) zum Vergleichen der Domänennamen, die mit den Transportverbindungen des Clusters assoziiert sind, und der Quantität von Daten und/oder der Quantität von Segmenten, die durch die Transportverbindungen des Clusters transportiert sind, für jeden Cluster mit vordefinierten Webbrowsing-Sitzungsprofilen; und
- einen Klassifizierungsschritt (s306) zum Klassifizieren der verschlüsselten Datenflüsse auf der Basis eines Ergebnisses des Vergleichsschritts.

2. Verfahren nach Anspruch 1, **dadurch gekennzeichnet, dass** die verschlüsselten Datenflüsse gemäß HTTPS sind und die Transportverbindungen gemäß TCP sind.

3. Verfahren nach Anspruch 2, **dadurch gekennzeichnet, dass** die Momente, zu welchen die Transportverbindungen initiiert worden sind, Momenten entsprechen, zu welchen die Analysevorrichtung jeweilige SYN TCP-Segmente der Transportverbindungen empfängt.

4. Verfahren nach einem der Ansprüche 1 bis 3, **dadurch gekennzeichnet, dass**, wenn die Adressierung aus einer Adresse und einem Port besteht, der Gruppierungsschritt so durchgeführt wird, dass:
- jeder Cluster nur Transportverbindungen mit derselben Webclient-Adresse enthält;
- jeder Cluster nur Transportverbindungen mit jeweiligen Webclient-Ports in einem Bereich enthält, so dass dann, wenn die Transportverbindungen zu ihrem jeweiligen Webclient-Port geordert werden, die Differenz zwischen zwei aufeinanderfolgenden Webclient-Ports eine erste vordefinierte Schwelle nicht übersteigt; und
- jeder Cluster nur Transportverbindungen enthält, die in einem Bereich initiiert worden sind, so dass dann, wenn die Transportverbindungen gemäß den Momenten geordert werden, zu welchen die Transportverbindungen initiiert worden sind, die Differenz zwischen zwei aufeinanderfolgenden Momenten, zu welchen die Transportverbindungen initiiert worden sind, eine zweite vordefinierte Schwelle nicht übersteigt.

5. Verfahren nach einem der Ansprüche 1 bis 4, **dadurch gekennzeichnet, dass** irgendeine Transportverbindung, die in einem Cluster gruppiert worden ist, eine Dauer hat, die eine dritte vordefinierte Schwelle übersteigt.

6. Verfahren nach Anspruch 5, **dadurch gekennzeichnet, dass** irgendeine Transportverbindung, die in einem Cluster gruppiert worden ist, eine Dauer hat, die unter einer vierten vordefinierten Schwelle ist, wobei die vierte vordefinierte Schwelle streng größer als die dritte vordefinierte Schwelle ist.

7. Verfahren nach den Ansprüchen 2 und 5 oder den Ansprüchen 2 und 6, **dadurch gekennzeichnet, dass** die Analysevorrichtung die Dauern der Transportverbindungen auf der Basis von Momenten bestimmt, zu welchen die Analysevorrichtung jeweilige FIN ACK TCP-Segmente der Transportverbindungen empfängt.

8. Verfahren nach einem der Ansprüche 1 bis 7, **dadurch gekennzeichnet, dass** die Analysevorrichtung die Dauern der Transportverbindungen auf der Basis von Momenten bestimmt, zu welchen die Analysevorrichtung die letzten TCP-Segmente der Transportverbindungen mit brauchbarer Nutzlast empfängt.

9. Verfahren nach einem der Ansprüche 1 bis 8, **dadurch gekennzeichnet, dass** die Analysevorrichtung berücksichtigt, dass ein Cluster nicht zu einem vordefinierten Webbrowsing-Sitzungsprofil passt, wenn mit den Transportverbindungen des Clusters assoziierte Domänennamen nicht mit Domänennamen übereinstimmen, die in dem vordefinierten Webbrowsing-Sitzungsprofil aufgelistet sind.

10. Verfahren nach einem der Ansprüche 1 bis 9, **dadurch gekennzeichnet, dass** die Analysevorrichtung berücksichtigt, dass ein Cluster zu einem vordefinierten Webbrowsing-Sitzungsprofil passt, wenn Information, die die Differenz zwischen Information in Bezug auf den Cluster und Information in Bezug auf das vordefinierte Webbrowsing-Sitzungsprofil darstellt, unter einer fünften vordefinierten Schwelle ist.

11. Verfahren nach Anspruch 10, **dadurch gekennzeichnet, dass** für jede mit irgendeiner Transportverbindung eines Clusters assoziierte Domäne zum Vergleichen mit einem vordefinierten Webbrowsing-Sitzungsprofil das Verfahren folgendes aufweist:
- einen dritten Bestimmungsschritt zum Bestimmen eines ersten Abstands zwischen einer Quantität von Transportverbindungen des Clusters und einer Quantität von durch das vordefinierte Webbrowsing-Sitzungsprofil erwarteten Transportverbindungen;
- einen vierten Bestimmungsschritt zum Bestimmen eines zweiten Abstands zwischen der Quantität von über die Transportverbindungen des Clusters gesendeten Segmenten und einer Quantität von durch das vordefinierte Webbrowsing-Sitzungsprofil erwarteten Segmenten; und
- einen fünften Bestimmungsschritt zum Bestimmen eines dritten Abstands zwischen der Quantität von über die Transportverbindungen des Clusters gesendeten Daten und einer Quantität von durch das vordefinierte Webbrowsing-Sitzungsprofil erwarteten Daten;
- einen sechsten Bestimmungsschritt zum Bestimmen einer Summe aus dem ersten, dem zweiten und dem dritten Abstand und zum Vergleichen der Summe mit einer sechsten vordefinierten Schwelle;
und dass das Verfahren weiterhin folgendes aufweist:
- einen siebten Bestimmungsschritt zum Bestimmen einer Quantität von mit irgendeiner Transportverbindung des Clusters assoziierten Domänen, für welche die Summe aus dem ersten, dem zweiten und dem dritten Abstand unter der sechsten vordefinierten Schwelle ist; und
- Berücksichtigen, dass der Cluster zu dem vordefinierten Webbrowsing-Sitzungsprofil passt, wenn die Quantität von Domänen über einer siebten vordefinierten Schwelle ist.

12. Vorrichtung zum Klassifizieren verschlüsselter Datenffüsse, die darauf abzielen, zwischen wenigstens einem Webclient und wenigstens einem Webserver aufzutreten und über Transportverbindungen transportiert zu werden, die zwischen dem wenigstens einen Webclient und dem wenigstens einen Webserver aufgebaut sind, wobei die Vorrichtung folgendes aufweist:
- eine ersten Bestimmungseinrichtung zum Bestimmen von Information, die Momente darstellt, zu welchen die Transportverbindungen jeweils initiiert worden sind, von Information über eine Adressierung von Endpunkten der Transportverbindungen und von Information über eine Quantität von Daten und/oder eine Quantität von Segmenten, die durch die Transportverbindungen transportiert sind;
- eine zweite Bestimmungseinrichtung zum Bestimmen eines Domänennamens, mit welchem jeder Webserver assoziiert ist, der ein Endpunkt von irgendeiner der Transportverbindungen ist;
- eine Gruppierungseinrichtung zum Gruppieren von Transportverbindungen in Cluster gemäß Kriterien in Bezug auf die Momente, zu welchen die Transportverbindungen jeweils initiiert worden sind, und auf die Adressierung der Webclients, die Endpunkte der Transportverbindungen sind;
- eine Vergleichseinrichtung zum Vergleichen der Domänennamen, die mit den Transportverbindungen des Clusters assoziiert sind, und der Quantität von Daten und/oder der Quantität von Segmenten, die durch die Transportverbindungen des Clusters transportiert sind, mit vordefinierten Webbrowsing-Sitzungsprofilen für jeden Cluster; und
- eine Klassifizierungseinrichtung zum Klassifizieren der verschlüsselten Datenflüsse auf der Basis eines Ergebnisses eines Implementierens der Vergleichseinrichtung.

13. Computerprogramm mit Programmcodeanweisungen, die in eine programmierbare Vorrichtung zum Implementieren des Verfahrens nach einem der Ansprüche 1 bis 11 geladen werden können, wenn man die Programmcodeanweisungen durch die programmierbare Vorrichtung laufen lässt.

14. Informationsspeichereinrichtung, die ein Computerprogramm mit Programmcodeanweisungen speichert, die in einer programmierbaren Vorrichtung geladen sein können, zum Implementieren des Verfahrens nach einem der Ansprüche 1 bis 11, wenn man die Programmcodeanweisungen durch die programmierbare Vorrichtung laufen lässt.

## Revendications

1. Procédé pour classer des flots de données chiffrées se produisant entre au moins un client web et au moins un serveur web, lesdits flots de données chiffrées étant transportés via des connexions de transport mises en place entre ledit au moins un client web et ledit au moins un serveur web, le procédé étant effectué par un dispositif analyseur, où le procédé comprend:
- une première étape de détermination (S301) consistant à déterminer des informations représentatives d'instants auxquels lesdites connexions de transport ont été respectivement initiées, des informations d'adressage de points de terminaison desdites connexions de transport et des informations sur une quantité de données et/ou une quantité de segments transportés par lesdites liaisons de transport;
- une seconde étape de détermination (S302) consistant à déterminer un nom de domaine auquel est associé chaque serveur web qui est un point de terminaison de l'une quelconque desdites connexion de transport;
- une étape de regroupement (S303) consistant à regrouper les connexions de transport en rassemblements en fonction de critères liés auxdits instants où lesdites connexions de transport ont été respectivement initiées et de l'adressage des clients web qui sont des points de terminaison desdites connexions de transport;
- une étape de comparaison (S305) consistant à comparer, pour chaque rassemblement, les noms de domaine associés aux connexions de transport dudit rassemblement et la quantité de données et/ou la quantité des segments transportés par les connexions de transport dudit rassemblement avec des profils prédéfinis de session de navigation web; et
- une étape de classification (S306) consistant à classifier les flots de données chiffrées sur la base d'un résultat de l'étape de comparaison.

2. Procédé selon la revendication 1, **caractérisé en ce que** lesdits flots de données chiffrées sont en conformité avec HTTPS et les connexions de transport sont en conformité avec TCP.

3. Procédé selon la revendication 2, **caractérisé en ce que** lesdits instants auxquels les connexions de transport ont été initiées correspondent à des instants auxquels ledit dispositif analyseur reçoit des segments SYN TCP respectifs desdites connexions de transport.

4. Procédé selon l'une quelconque des revendications 1 à 3, **caractérisé en ce que**, l'adressage consistant en une adresse et un port, l'étape de regroupement est effectuée de telle sorte que :
- chaque rassemblement contient seulement des connexions de transport avec la même adresse de client web ;
- chaque rassemblement contient seulement des connexions de transport avec des ports de clients web respectifs dans un intervalle tel que, en ordonnant les connexions de transport selon leur port de client web respectif, la différence entre deux ports de client web successifs ne dépasse pas un premier seuil prédéfini ; et
- chaque rassemblement contient seulement des connexions de transport qui ont été initiées dans un intervalle tel que, en ordonnant les connexions de transport selon les instants auxquels lesdites connexions de transport ont été initiées, la différence entre deux instants successifs auxquels lesdites connexions de transport ont été initiées ne dépasse pas un second seuil prédéfini.

5. Procédé selon l'une quelconque des revendications 1 à 4, **caractérisé en ce que** toute connexion de transport qui est groupée dans un rassemblement a une durée qui dépasse un troisième seuil prédéfini.

6. Procédé selon la revendication 5, **caractérisé en ce que** toute connexion de transport qui est groupée dans un rassemblement a une durée qui est en dessous d'une quatrième seuil prédéfini, le quatrième seuil prédéfini étant strictement supérieur que le troisième seuil prédéfini.

7. Procédé selon les revendications 2 et 5 ou selon les revendications 2 et 6, **caractérisé en ce que** le dispositif analyseur détermine les durées des connexions de transport sur la base d'instants auxquels ledit dispositif analyseur reçoit des segments FIN ACK TCP respectifs desdites connexions de transport.

8. Procédé selon l'une quelconque des revendications 1 à 7, **caractérisé en ce que** le dispositif analyseur détermine les durées de connexions de transport sur la base d'instants auxquels ledit dispositif analyseur reçoit les derniers segments TCP desdites connexions de transport avec des données utiles.

9. Procédé selon l'une quelconque des revendications 1 à 8, **caractérisé en ce que** le dispositif analyseur considère qu'un rassemblement ne correspond pas à un profil prédéfini de session de navigation web quand des noms de domaine associés aux connexions de transport dudit rassemblement ne coïncident pas avec des noms de domaines listés dans ledit profil prédéfini de session de navigation web.

10. Procédé selon l'une quelconque des revendications 1 à 9, **caractérisé en ce que** le dispositif analyseur considère qu'un rassemblement correspond à un profil prédéfini de session de navigation web quand une information représentative de la différence entre une information liée audit rassemblement et une information liée audit profil prédéfini de session de navigation web est en dessous

11. Procédé selon la revendication 10, **caractérisé en ce que**, pour chaque domaine associé avec toute connexion de transport d'un rassemblement à comparer avec un profil prédéfini de session de navigation web, le procédé comprend :
- une troisième étape de détermination consistant à déterminer une première distance entre la quantité de connexions de transport dudit rassemblement et une quantité de connexions de transport espérée par ledit profil prédéfini de session de navigation web ;
- une quatrième étape de détermination consistant à déterminer une seconde distance entre la quantité de segments transmis via les connexions de transport dudit rassemblement et une quantité de segments espérée par ledit profil prédéfini de session de navigation web ;
- une cinquième étape de détermination consistant à déterminer une troisième distance entre la quantité de données transmises via les connexions de transport dudit rassemblement et une quantité de données espérée par ledit profil prédéfini de session de navigation web ; et
- une sixième étape de détermination consistant à déterminer une somme des première, seconde et troisième distances et à comparer la somme avec un sixième seuil prédéfini ;
et **en ce que** le procédé comprend en outre :
- une septième étape de détermination consistant à déterminer une quantité de domaines associés à toute connexion de transport du rassemblement pour lequel la somme des première, seconde et troisième distances est en dessous du sixième seuil prédéfini ; et
- considérer que le rassemblement correspond au profil prédéfini de session de navigation web quand ladite quantité de domaines est au-dessus d'un septième seuil prédéfini.

12. Dispositif pour classer des flots de données chiffrées devant se produire entre au moins un client web et au moins un serveur web et devant être transportés via des connexions de transport mises en place entre ledit au moins un client web et ledit au moins un serveur web, le dispositif comprenant:
- des premiers moyens de détermination pour déterminer des informations représentatives d'instants auxquels lesdites connexions de transport ont été respectivement initiées, des informations d'adressage de points de terminaison desdites connexions de transport et des informations sur une quantité de données et/ou une quantité de segments transportés par lesdites liaisons de transport;
- des seconds moyens de détermination pour déterminer un nom de domaine auquel est associé chaque serveur web qui est un point de terminaison de l'une quelconque desdites connexion de transport;
- des moyens de regroupement consistant à regrouper les connexions de transport en rassemblements en fonction de critères liés auxdits instants où lesdites connexions de transport ont été respectivement initiées et de l'adressage des clients web qui sont des points de terminaison desdites connexions de transport;
- des moyens de comparaison consistant à comparer, pour chaque rassemblement, les noms de domaine associés aux connexions de transport dudit rassemblement et la quantité de données et/ou la quantité des segments transportés par les connexions de transport dudit rassemblement avec des profils prédéfinis de session de navigation web; et
- des moyens de classification pour classifier les flots de données chiffrées sur la base d'un résultat d'implémentation des moyens de comparaison.

13. Programme d'ordinateur comprenant des instructions de code de programme qui peuvent être chargées dans un dispositif programmable pour implémenter le procédé selon l'une quelconque des revendications 1 à 11, lorsque les instructions de code de programme sont exécutées par le dispositif programmable.

14. Moyens de stockage d'informations stockant un programme d'ordinateur comprenant des instructions de code de programme qui peuvent être chargées dans un dispositif programmable pour implémenter le procédé selon l'une quelconque des revendications 1 à 11, lorsque les instructions de code de programme sont exécutées par le dispositif programmable.
